# FASCICULE DE BREVET EUROPEEN

(11) **EP 0 952 719 B1**
(45) Date de publication et mention de la délivrance du brevet: **24.10.2007**
(21) Numéro de dépôt: 99400794.6
(22) Date de dépôt: 01.04.1999
(51) Int. Cl.: H04M 1/02

(54) **Terminal de radiocommunication**
Funkendgerät
Radiocommunications terminal

(30) Priorité: 20.04.1998 FR 9804929
(43) Date de publication de la demande: 27.10.1999
(73) Titulaire: TCL & ALCATEL MOBILE PHONES LIMITED, China Hong Kong City, 33 Canton Road, Tsim Sha Tsui,Kowloon, Hong Kong (CN)
(72) Inventeur: Attimont, Luc, 78560 Le Port Marly (FR); Bodin, Jannick, 92380 Garches (FR)
(74) Mandataire: Feray, Valérie

(56) Documents cités:
- EP-A- 0 651 546
- DE-A- 3 836 406

## Description

L'invention concerne un terminal de radiocommunication.

Par terminal de radiotélécommunication on entend plus précisément mais de manière non limitative les terminaux des téléphones sans fil et les terminaux mobiles de type GSM.

L'invention s'applique plus particulièrement aux terminaux de radiotélécommunication de petite taille pour lesquels il est difficile de reproduire la distance bouche-oreille de l'utilisateur, requise pour obtenir une bonne exploitation de la partie audio du terminal.

Usuellement, les terminaux de radiocommunication comportent un boîtier présentant une face avant, une face arrière et une base. La face avant comporte généralement un clavier, un écran, une ouverture d'entrée constituant une interface d'entrée avec un microphone et une ouverture de sortie constituant une interface de sortie avec un écouteur. Le microphone et l'écouteur sont montés dans le boîtier, l'entrée du microphone et la sortie de l'écouteur étant orientées respectivement vers l'ouverture d'entrée et l'ouverture de sortie.

Une solution au problème mentionné plus haut consiste à ajouter dans le terminal une pièce permettant de déployer le micro de sorte que la distance entre le microphone et l'écouteur du terminal corresponde sensiblement à la distance bouche-oreille de l'utilisateur.

Dans le document EP 0 651 546, cette pièce est sous la forme d'un volet articulé à la base du boîtier, qui, en position d'utilisation, prolonge le terminal. Ce volet contient le microphone et présente une ouverture d'entrée sur la face correspondant à la face avant du boîtier.

Ce document décrit également une autre solution selon laquelle le volet est remplacé par une pièce plus courte orientable.

Cependant ces solutions nécessitent l'apport d'une pièce mécanique supplémentaire sur le terminal avec des moyens mécaniques de liaison, ce qui augmente le volume et le coût du terminal.

En outre, les moyens mécaniques de liaison ont une durée de vie limitée et ont, comme tout matériel mécanique, une fiabilité très relative.

L'invention vise donc à palier ces inconvénients.

L'invention a pour objet un terminal téléphonique dont la structure permet de respecter la distance requise entre la bouche et l'oreille de l'utilisateur, de manière à obtenir une bonne exploitation de la partie audio du poste, et sans ajouter d'élément mécanique supplémentaire sur le terminal.

L'invention concerne, en outre, un terminal de radiocommunication dont le coût et le volume sont réduits.

A cet effet et suivant un premier aspect, l'invention propose un terminal de radiocommunication, comportant un boîtier présentant une face avant, une face arrière et une base, le terminal comportant en outre un microphone et un écouteur montés dans le boîtier, et au moins une ouverture d'entrée constituant une interface d'entrée avec le microphone et au moins une ouverture de sortie constituant une interface de sortie avec l'écouteur, caractérisé en ce que l'ouverture d'entrée est sur ladite face arrière.

Ainsi, en position normale d'utilisation, c'est dire lorsque l'utilisateur est en communication et tient son terminal dans la main, l'ouverture d'entrée constituant l'interface d'entrée avec le microphone est du côté de la paume de la main, de sorte qu'un guide d'ondes acoustiques est formé par la face arrière du boîtier, d'une part, et la cavité formée entre le terminal et la paume de la main d'autre part.

Par conséquent, la distance bouche-oreille de l'utilisateur est reproduite, de sorte qu'une bonne exploitation de la partie audio est obtenue augmenter le volume et le coût du terminal ou réduire sa fiabilité.

En outre, en position mains-libres, c'est à dire lorsque le terminal est posé par exemple sur une table, cette dernière permet également de former un guide d'ondes acoustiques, de sorte que la transmission du son est également bonne dans cette position.

Suivant un mode de réalisation permettant d'éloigner au maximum le microphone de l'écouteur, le microphone est monté à proximité d'une zone frontalière entre la base et la face arrière du boîtier.

En outre, pour améliorer encore le guidage de la parole de l'utilisateur, un évidement est ménagé dans la zone frontalière.

Cet évidement peut présenter une forme arrondie ménagée sur une partie de ladite zone frontalière, s'étendant sensiblement au centre de la zone frontalière.

Suivant un autre mode de réalisation, l'évidement présente une forme de biseau.

Pour ne pas avoir à modifier la position du microphone dans les terminaux déjà existant pour lesquels le microphone est usuellement orienté vers la face avant du boîtier, le terminal comporte, en outre, une amorce de guide d'ondes acoustiques ménagée dans le boîtier, à proximité du microphone et dont l'entrée est orientée vers le microphone et dont la sortie est orientée vers l'ouverture d'entrée constituant l'interface d'entrée avec le microphone.

Suivant un deuxième aspect, l'invention propose un appareil mains-libres comportant un terminal selon l'invention, caractérisé en ce qu'il comporte en outre un moyen formant paroi distinct du terminal, permettant de créer, avec la face arrière du boîtier du terminal, un guide d'ondes acoustiques permettant de guider la parole émise par un utilisateur vers l'ouverture d'entrée constituant l'interface d'entrée avec le microphone.

Suivant un mode de réalisation, le moyen formant paroi est constitué par l'élément contre lequel la face arrière du boîtier est appliquée.

Suivant un troisième aspect, l'invention propose un moyen formant guide d'ondes acoustiques destiné à être utilisé avec un terminal selon l'invention, présentant une forme telle qu'il crée, avec la face arrière du boîtier du terminal, un guide d'ondes acoustiques permettant de guider la parole émise par un utilisateur vers l'ouverture d'entrée constituant l'interface d'entrée avec le microphone.

L'invention sera mieux comprise dans la description qui va suivre de modes de réalisation donnés uniquement à titre d'exemple, en référence aux figures annexées.
La figure 1 est une représentation schématique en perspective, vue côté face avant d'un premier mode de réalisation d'un terminal selon l'invention, en position d'utilisation.
La figure 2 est une représentation schématique en perspective, vue côté face arrière du terminal de la figure 1.
La figure 3 est une représentation schématique en perspective, vue côté face avant d'un deuxième mode de réalisation d'un terminal en position d'utilisation.
La figure 4 est une représentation schématique en perspective, vue côté face arrière du terminal de la figure 3.
La figure 5 est une représentation schématique en perspective, vue côté face avant d'un troisième mode de réalisation d'un terminal en position d'utilisation.
La figure 6 est une représentation schématique en perspective, vue côté face arrière du terminal de la figure 5.
La figure 7 est une représentation schématique en perspective, vue côté face avant d'un mode de réalisation d'un appareil mains-libres selon l'invention.

Le terminal 1 est destiné à être utilisé soit en position dite normale, où il est dans la main de l'utilisateur, soit en position mains-libres.

Il comporte un boîtier 2 présentant une face avant 3, une face arrière 4, une base 5 et des bords latéraux 6.

Sur la face avant 3 sont montés notamment un écran 7 et un clavier 8 à touches 9. La face avant 3 comporte, en outre une ouverture de sortie 10 qui constitue une interface avec un écouteur (non représenté) monté dans le boîtier 2. Comme cela est connu de l'homme du métier, l'interface avec l'écouteur peut être constituée de plusieurs ouvertures de sortie 10.

Le terminal 1 comporte, en outre une ouverture d'entrée 11 constituant une interface d'entrée avec un microphone (non représenté) monté également dans le boîtier 2. Là encore, l'interface d'entrée peut être constituée de plusieurs ouvertures d'entrée 11.

Selon l'invention, l'ouverture d'entrée 11 est ménagée sur la face arrière 4 du boîtier 2 du terminal 1.

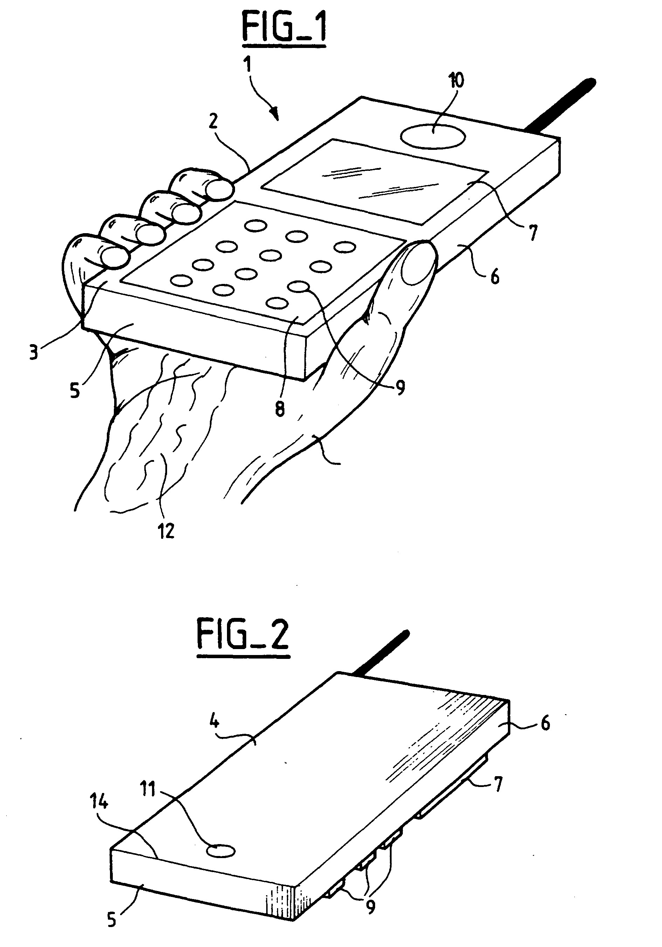

Ainsi, en position normale d'utilisation, la parole émise par l'utilisateur est guidée vers l'ouverture d'entrée 11 par l'intermédiaire d'un guide d'ondes acoustiques 12, représenté en pointillés sur la figure 1, qui est formé par la face arrière 4 du boîtier 2, d'une part, et par la cavité créée entre le terminal et la paume de la main 13 de l'utilisateur, d'autre part. Ce guide d'onde 12 permet de reproduire la distance bouche-oreille de l'utilisateur, requise pour avoir une bonne exploitation de la partie audio du terminal 1, et ce plus particulièrement pour les terminaux de petite taille.

Cependant, cette structure peut également s'appliquer à des terminaux de plus grande taille pour lesquels la distance ouverture d'entrée-ouverture de sortie correspond déjà sensiblement à la distance bouche-oreille de l'utilisateur. Elle présente en effet l'avantage, dans ce cas, de pouvoir bénéficier de place supplémentaire sur la face avant par rapport aux terminaux de l'art antérieur, puisqu'il n'est plus nécessaire d'y prévoir un espace spécifique pour l'ouverture d'entrée.

Le guide d'onde 12 est également présent lorsque le terminal 1 est en position mains-libres. Dans ce cas, il est formé par la face arrière 4 du boîtier 2, d'une part, et la cavité créée entre le terminal et la paroi contre laquelle la face arrière 4 est appliquée, d'autre part. Cette paroi peut être constituée par un plan de table, le bord d'un mur si le terminal est en position verticale, ou analogue.

De préférence, l'ouverture d'entrée 11 est située à proximité d'une zone frontalière 14 entre la face arrière 4 et la base 5 du boîtier 2 pour que sa distance avec l'écouteur soit la plus grande possible. D'autre part, compte tenu de la forme de la main de l'utilisateur, l'ouverture d'entrée 11 est de préférence centrée par rapport aux bords latéraux 6 du boîtier 2.

Pour améliorer le guidage de la parole de l'utilisateur, un évidement est ménagé dans la zone frontalière 14.

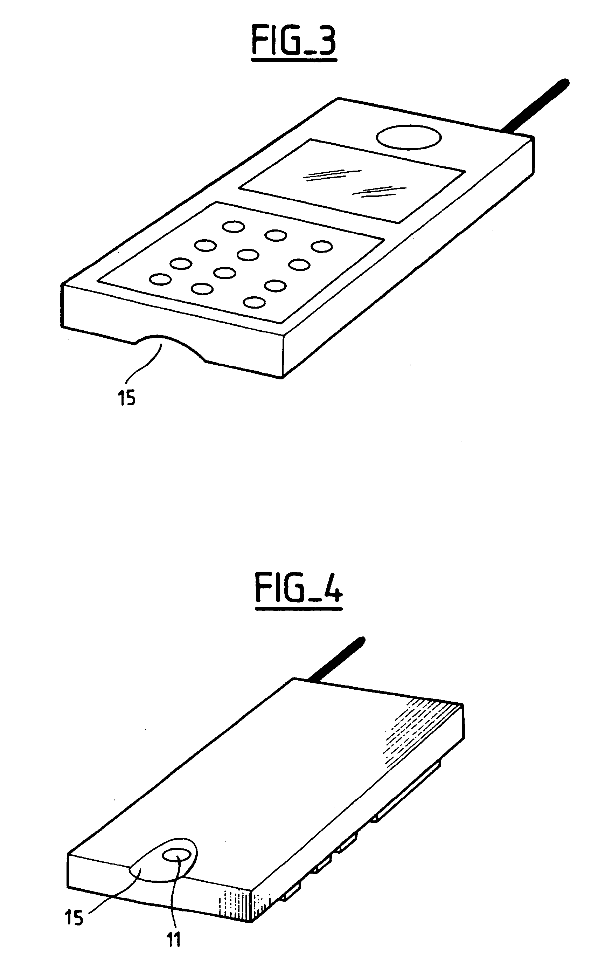

Suivant un premier mode de réalisation, tel que représenté aux figures 3 et 4, l'évidement est un creux 15 présentant une forme arrondie et ménagé sur une partie de ladite zone frontalière 14. De préférence, lé creux 15 s'étend sensiblement au centre de la zone frontalière 14.

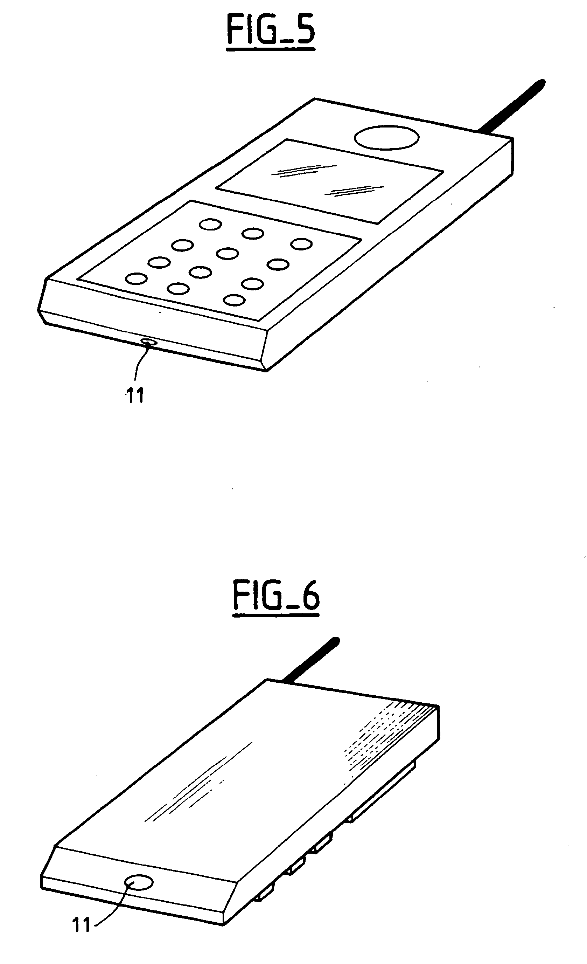

Suivant un deuxième mode de réalisation, tel que représenté aux figures 5 et 6, l'évidement présente une forme de biseau 16.

Bien entendu, la portée de la présente invention ne se limite pas aux détails des formes de réalisation ci-dessus considérées à titre d'exemple, mais s'étend au contraire aux modifications à la portée de l'homme de l'art.

En outre, pour ne pas avoir à modifier l'emplacement du microphone dans les terminaux actuels, le terminal 1 peut comporter une amorce de guide d'ondes acoustiques ménagée dans le boîtier 2, à proximité du microphone et dont l'entrée est orientée vers le microphone et dont la sortie est orientée vers l'ouverture d'entrée 11.

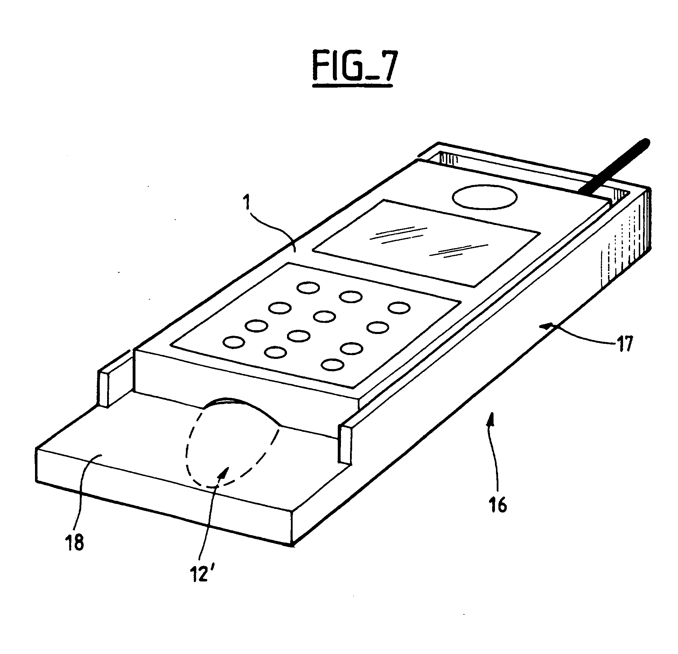

L'invention concerne également un appareil mains-libres 16 tel que représenté à la figure 7.

Cet appareil 16 comporte un terminal 1 tel que décrit précédemment et un boîtier 17 de réception du terminal 1. Un des bords, sur la figure le fond 18 du boîtier de réception 17 constitue un moyen formant paroi distinct du terminal 1, permettant de créer, avec la face arrière 4 du boîtier 2 du terminal 1, un guide d'ondes acoustiques 12' semblable au guide d'onde 12 qui sert à guider la parole émise par un utilisateur vers l'ouverture d'entrée 11 constituant l'interface d'entrée avec le microphone.

D'une manière plus générale, le moyen formant paroi est constitué par l'élément contre lequel la face arrière 4 du boîtier 2 est appliquée.

Enfin, l'invention concerne un moyen formant guide d'ondes acoustiques destiné à être utilisé avec le terminal 1 décrit précédemment, présentant une forme telle qu'il crée, avec la face arrière 4 du boîtier 2 du terminal, un guide d'ondes acoustiques permettant de guider la parole émise par un utilisateur vers l'ouverture d'entrée 11 constituant l'interface d'entrée avec le microphone.

## Revendications

1. Terminal de radiocommunication, comportant un boîtier (2) présentant une face avant (3), une face arrière (4) et une base (5), le terminal comportant en outre un microphone et un écouteur montés dans le boîtier (2), et au moins une ouverture d'entrée (11) constituant une interface d'entrée avec le microphone et au moins une ouverture de sortie (10) constituant une interface de sortie avec l'écouteur, **caractérisé en ce que** l'ouverture d'entrée (11) est sur ladite face arrière (4).

2. Terminal selon la revendication 1, **caractérisé en ce que** le microphone est monté à proximité d'une zone frontalière (14) entre la base (5) et la face arrière (4) du boîtier (2).

3. Terminal selon la a revendication 1 ou 2, **caractérisé en ce qu'**un évidement (15, 16) est ménagé dans une zone frontalière (14) entre la base (5) et la face arrière (4).

4. Terminal selon la revendication 3, **caractérisé en ce que** l'évidement présente une forme arrondie (15) ménagée sur une partie de ladite zone frontalière (14).

5. Terminal selon la revendication 4, **caractérisé en ce que** la forme arrondie (15) s'étend sensiblement au centre de la zone frontalière (14).

6. Terminal selon la revendication 3, **caractérisé en ce que** l'évidement présente une forme de biseau (16).

7. Terminal selon l'une quelconque des revendications 1 à 6, **caractérisé en ce qu'**il comporte, en outre, une amorce de guide d'ondes acoustiques ménagée dans le boîtier (2), à proximité du microphone et dont l'entrée est orientée vers le microphone et dont la sortie est orientée vers l'ouverture d'entrée (11) constituant l'interface d'entrée avec le microphone.

8. Appareil mains-libres comportant un terminal conforme à l'une quelconque des revendications 1 à 7, **caractérisé en ce qu'**il comporte en outre un moyen formant paroi (18) distinct du terminal, permettant de créer, avec la face arrière (4) du boîtier (2) du terminal, un guide d'ondes acoustiques (12') permettant de guider la parole émise par un utilisateur vers l'ouverture d'entrée (11) constituant l'interface d'entrée avec le microphone.

9. Appareil selon la revendication 8, **caractérisé en ce que** le moyen formant paroi est constitué par l'élément (18) contre lequel la face arrière (4) du boîtier (2) est appliquée.

10. Moyen formant guide d'ondes acoustiques destiné à être utilisé avec un terminal selon l'une quelconque des revendications 1 à 7, présentant une forme telle qu'il crée, avec la face arrière (4) du boîtier (2) du terminal, un guide d'ondes acoustiques permettant de guider la parole émise par un utilisateur vers l'ouverture d'entrée (11) constituant l'interface d'entrée avec le microphone.

## Claims

1. A radiocommunications terminal, including a casing (2) having a front face (3), a rear face (4) and a base (5), the terminal further including a microphone and an earphone mounted in the casing (2), and at least one input aperture (11) forming an input interface with the microphone and at least one output aperture (10) forming an output interface with the earphone, **characterized in that** the input aperture (11) is on said rear face (4).

2. The terminal according to claim 1, **characterized in that** the microphone is mounted in proximity to a boundary area (14) between the base (5) and the rear face (4) of the casing (2).

3. The terminal according to claim 1 or 2, **characterized in that** a recess (15, 16) is provided in a boundary area (14) between the base (5) and the rear face (4).

4. The terminal according to claim 3, **characterized in that** the recess has a rounded shape (15) provided on a portion of said boundary area (14).

5. The terminal according to claim 4, **characterized in that** the rounded shape (15) substantially extends to the center of the boundary area (14).

6. The terminal according to claim 3, **characterized in that** the recess has a bevel shape (16).

7. The terminal according to any of claims 1 to 6, **characterized in that** it further includes a start of acoustic waveguide provided in the casing (2) in proximity to the microphone and the input of which is oriented towards the microphone and the output of which is oriented towards the input aperture (11) forming the input interface with the microphone.

8. A hands-free device including a terminal according to any of claims 1 to 7, **characterized in that** it further includes a means forming a distinct wall (18) of the terminal, allowing with the rear face (4) of the casing (2) of the terminal, an acoustic waveguide (12') to be created, with which the speech emitted by a user may be guided towards the input aperture (11) forming the input interface with the microphone.

9. The device according to claim 8, **characterized in that** the wall-forming means is formed by the member (18) against which the rear face (4) of the casing (2) is applied.

10. A means forming an acoustic waveguide intended to be used with a terminal according to any of claims 1 to 7, having a shape such that it creates with the rear face (4) of the casing (2) of the terminal, an acoustic waveguide with which the speech emitted by a user may be guided towards the input aperture (11) forming the input interface with the microphone.

## Patentansprüche

1. Funkendgerät mit einem Gehäuse (2), das eine Vorderseite (3), eine Rückseite (4) und eine Basisfläche (5) aufweist, wobei das Endgerät darüber hinaus ein Mikrofon und einen Kopfhörer besitzt, die in dem Gehäuse (2) montiert sind, sowie mindestens eine Eingangsöffnung (11), die ein Eingangsinterface mit dem Mikrofon darstellt, und mindestens eine Ausgangsöffnung (10), die ein Ausgangsinterface mit dem Kopfhörer darstellt, **dadurch gekennzeichnet, dass** sich die Eingangsöffnung (11) an der Rückseite (4) befindet.

2. Endgerät nach Anspruch 1, **dadurch gekennzeichnet, dass** das Mikrofon in der Nähe eines Grenzbereichs (14) zwischen der Basisfläche (5) und der Rückseite (4) des Gehäuses (2) montiert ist.

3. Endgerät nach Anspruch 1 oder 2, **dadurch gekennzeichnet, dass** eine Aussparung (15, 16) in einem Grenzbereich (14) zwischen der Basisfläche (5) und der Rückseite (4) angeordnet ist.

4. Endgerät nach Anspruch 3, **dadurch gekennzeichnet, dass** die Aussparung eine abgerundete Form (15) aufweist und sich in einem Abschnitt des Grenzbereichs (14) befindet.

5. Endgerät nach Anspruch 4, **dadurch gekennzeichnet, dass** sich die abgerundete Form (15) im wesentlichen zur Mitte des Grenzbereichs (14) hin erstreckt.

6. Endgerät nach Anspruch 3, **dadurch gekennzeichnet, dass** die Aussparung die Form einer Schrägfläche (16) aufweist.

7. Endgerät nach einem der Ansprüche 1 bis 6, **dadurch gekennzeichnet, dass** es darüber hinaus eine Ansteuerung für den akustischen Wellenleiter besitzt, die in dem Gehäuse (2) in der Nähe des Mikrofons angeordnet ist, und deren Eingang in Richtung Mikrofon und deren Ausgang in Richtung Eingangsöffnung (11) gerichtet ist, die das Eingangsinterface mit dem Mikrofon darstellt.

8. Freisprechanlage mit einem Endgerät nach einem der Ansprüche 1 bis 7, **dadurch gekennzeichnet, dass** sie darüber hinaus ein Element besitzt, das eine von dem Endgerät getrennte Wand (18) bildet, durch die mit der Rückseite (4) des Gehäuses (2) des Endgerätes ein akustischer Wellenleiter (12') erzeugt werden kann, so dass die von einem Benutzer ausgesendete Sprache zu der Eingangsöffnung (11) geleitet werden kann, die das Eingangsinterface mit dem Mikrofon darstellt.

9. Anlage nach Anspruch 8, **dadurch gekennzeichnet, dass** das Element, das die Wand bildet, aus einem Element (18) besteht, an dem die Rückseite (4) des Gehäuses (2) befestigt ist.

10. Element, das einen akustischen Wellenleiter bildet, und zur Verwendung mit einem Endgerät nach einem der Ansprüche 1 bis 7 bestimmt ist, und eine Form aufweist, so dass es mit der Rückseite (4) des Gehäuses (2) des Endgerätes einen akustischen Wellenleiter erzeugt, mit dem die von einem Benutzer ausgesendete Sprache zu der Eingangsöffnung (11) geleitet werden kann, die das Eingangsinterface mit dem Mikrofon darstellt.
